## Europäisches Patentamt
## European Patent Office
## Office européen des brevets

(19)

(11) Veröffentlichungsnummer: **0 021 376**
**B1**

# EUROPÄISCHE PATENTSCHRIFT

(12)

(45) Veröffentlichungstag der Patentschrift:
**13.02.85**

(51) Int. Cl.⁴: **H 01 M 8/24, C 25 B 9/00**

(21) Anmeldenummer: **80103489.3**

(22) Anmeldetag: **21.06.80**

(54) Elektroden für eine Brennstoff- und/oder Elektrolyse-Zelle.

(30) Priorität: **03.07.79 DE 2926776**

(43) Veröffentlichungstag der Anmeldung:
**07.01.81 Patentblatt 81/1**

(45) Bekanntmachung des Hinweises auf die Patenterteilung:
**13.02.85 Patentblatt 85/7**

(84) Benannte Vertragsstaaten:
**FR GB IT NL**

(56) Entgegenhaltungen:
**BE - A - 873 283**
**DE - B - 1 293 271**
**FR - A - 1 584 577**
**FR - A - 2 306 540**
**FR - A - 2 398 392**
**FR - A - 2 410 059**
**US - A - 3 432 357**
**US - A - 3 607 425**

(73) Patentinhaber: **HIGRATHERM electric GmbH, Kunzestrasse 24, D-7100 Heilbronn (DE)**

(72) Erfinder: **Dahlberg, Reinhard, Dr., Innere Bergstrasse 32, D-7101 Flein (DE)**

**Beschreibung**

Die vorliegende Erfindung betrifft Elektroden für eine Brennstoff- und/oder Elektrolyse-Zelle, bei der als Anode und Kathode zwei Platten oder Scheiben aus geeignetem Material vorgesehen sind, wobei jede Platte oder Scheibe mindestens auf einer ihrer beiden Oberflächenseiten eine Struktur aus wechselweise und parallel zueinander verlaufenden Wällen und Gräben aufweist und die beiden Platten oder Scheiben — mit mindestens einer Membran als Zwischenlage — mit ihren strukturierten Oberflächenseiten so zusammengesetzt sind, daß alle Wälle in der Struktur beider Platten sich kreuzen und an den Kreuzungspunkten auf beiden Seiten der Membran aufliegen, so daß die Gräben in beiden Platten oder Scheiben zwei sich kreuzende Systeme von parallel zueinander verlaufenden Halb-Röhren bilden, die durch die Membran voneinander getrennt sind. Derartige Elektroden sind aus der BE-A 873 283 oder der FR-A 2 398 392 bekannt.

Elektroden für die Elektrolyse, z. B. von Wasser, oder für die katalytische, kalte Verbrennung von Wasserstoff und Sauerstoff bestehen infolge der mechanischen, elektrischen, thermischen und chemischen Anordnung aus einer sorgfältig aufeinander abgestimmten Auswahl von Materialien. Während man früher sowohl für Elektrolyse- als auch für Brennstoff-Zellenbatterien den Aufbau in der sogenannten Gußblock-Form (ähnlich wie z. B. Akkumulatoren) gewählt hat, wird heute immer stärker die sogenannte Filterpressen-Bauweise bevorzugt. Bei der Filterpressen-Bauweise sind die einzelnen Elektroden in einem Rahmen zum Zu- und Abführen der Reaktionsgase und der Elektrolyten eingepaßt. Die Elektroden werden mit Zwischendichtungen in einem Rahmen in Form einer Filterpresse aufeinandergelegt. Die durch die Dichtungen und den Elektrodenrahmen gebildeten Reaktionsgas- und Elektrolyt-Räume zwischen den Elektroden sind durch kleine Kanäle mit Aussparungen verbunden, durch die der Stofftransport für die elektrochemische Reaktion stattfindet. Bei der bipolaren Bauweise besteht noch eine Verbindung von Anode zu Kathode zweier benachbarter Brennstoffzellen, so daß bei filterpressenartigem Aufeinanderschichten die Brennstoffzellen von selbst elektrisch in Reihe geschaltet sind. Da bei diesem Aufbau jeweils Wasserstoff- und Sauerstoff-Raum aneinander grenzen, müssen beide Gasräume durch eine korrosionsbeständige, elektrisch leitende und gasdichte Folie voneinander getrennt werden. Diese steht zur Anode und zur Kathode in elektrisch leitender Verbindung. Mit dieser Art des Aufbaus wird eine relativ kompakte und betriebssichere Bauweise erzielt. Bei einer weiteren Steigerung in der Kompaktheit des Aufbaus von Brennstoff- und Elektrolyse-Zellen ist es möglich, bei gleicher Elektrolyse-Leistung pro Gewicht oder Volumen (wie bei konventionellen Elektrolyse-Batterien) mit wesentlich kleineren Stromdichten zu arbeiten. Diese Aufgabe wird bei Elektroden der eingangs erwähnten Art nach der Erfindung dadurch gelöst, daß die Dicke der Platten oder Scheiben kleiner als $5 \cdot 10^{-2}$ cm ist.

Das Prinzip der gekreuzten, parallelen Wälle ist auch bereits in DE-A-2 547 262 beschrieben worden. Die Ausgestaltung dieses Prinzips als Elektroden für Elektrolyse- und Brennstoff-Zellen wird dort jedoch nicht erwähnt.

In der FR-A 2 410 059, wird erwähnt, daß Elektroden eine Dicke von 0,5 mm aufweisen sollen. Diese Elektroden sind jedoch über die ganzen Abmessungen stets gleich dick und so gebogen, daß ein wellenförmiger Verlauf zustande kommt. Dies erfordert einen Platzbedarf, der wesentlich über dem der erfindungsgemäßen Elektroden liegt.

Bei der Erfindung sind die beiden Systeme von Halb-Röhren bezüglich ihrer Strukturen vorzugsweise um 90° gegeneinander in der Platten- oder Scheibenebene gedreht. Diese beiden getrennten Systeme parallel zueinander verlaufender Halb-Röhren können zur Zuleitung oder zur Abführung von Reaktionspartnern und Reaktionsprodukten benutzt werden.

Die Platten oder Scheiben können aus Graphit, mit Graphit überzogenem Metall, aus Metall, aus einer metallisch leitenden Verbindung oder auch aus hochdotiertem Halbleitermaterial wie z. B. Strontiumtitanat oder Silizium bestehen. Die Membran kann aus anorganischem Filz, Glaspapier, Asbestpapier oder auch aus organischem Material wie z. B. PVC, Polyäthylen oder Polysulfon bestehen.

Die Membran kann eine Ionenaustauscher-Membran oder auch eine Matrix mit festgelegtem Elektrolyten (z. B. Glasflies mit aufgesaugter Säure) sein. Die Anodenseite und Kathodenseite der Membran kann mit je einer Katalysatorschicht überzogen sein. Beispielsweise eignet sich Wolframcarbidpulver für die Kathode und Kohlepulver für die Anode.

Zwischen der Membran und der Kathode oder zwischen der Membran und der Anode kann eine Wasser-ableitende Folie (»Docht-Folie«) angeordnet werden. Die Elektroden nach der Erfindung können z. B. mit einer Glaspapier-Membran in einer Elektrolyse-Anordnung zur Herstellung von Wasserstoff und Sauerstoff verwendet werden. Ferner können sie auch z. B. mit einer Ionenaustauscher-Membran mit Katalysatorschichten und einer Docht-Membran mit Katalysatorschichten und einer Docht-Membran auf der Kathodenseite in einer Brennstoff-Zellen-Anordnung für Wasserstoff und Sauerstoff verwendet werden.

Mit einer Grabentiefe von $5 \cdot 10^{-3}$ cm lassen sich z. B. Elektroden herstellen, die auf beiden Seiten ein System von parallel zueinander verlaufenden Gräben haben, wobei die Grabensysteme beider Scheiben gegeneinander, vorzugsweise um 90°, verdreht sind. Die Gräben haben eine Maximalbreite von ca. $\cdot 10^{-2}$ cm. Mit einer Membran zusammengesetzt, die etwa $5 \cdot 10^{-3}$ cm dick ist, lassen sich damit z. B. 400 Elektrolyse-Zellen auf 10 Zentimeter Länge durch Aufschichten der dann elektrisch in

2

Serie geschalteten Elektroden herstellen. Mit derartigen Elektrolyse-Batterien ist es möglich, bei gleicher Elektrolyse-Leistung pro Gewicht oder Volumen (wie bei konventionellen Elektrolyse-Batterien) mit wesentlich kleineren Stromdichten zu arbeiten. Die Stromdichten sind vorzugsweise kleiner als 20 mA/cm² und betragen bei einem Ausführungsbeispiel etwa 1 mA/cm². Da der Wirkungsgrad bei kleinen Stromdichten aber bekanntlich größer ist als bei größeren Stromdichten, ermöglichen die Elektroden nach der Erfindung höhere Wirkungsgrade der Energieumwandlung in Elektrolyse-Zellen und in Brennstoff-Zellen bei gleichem Leistungsgewicht.

Im folgenden wird die Erfindung annhand von 3 Ausführungsbeispielen näher beschrieben.

Ausführungsbeispiel 1 beschreibt eine Elektrolyse-Zelle für die Herstellung von Wasserstoff und Sauerstoff aus Wasser. Ausführungsbeispiel 2 beschreibt eine Elektrolyse-Batterie zur Erzeugung von Wasserstoff und Sauerstoff aus Wasser. Ausführungsbeispiel 3 beschreibt eine Brennstoff-Zellen-Batterie zur kalten Verbrennung von Wasserstoff und Sauerstoff.

## Ausführungsbeispiel 1

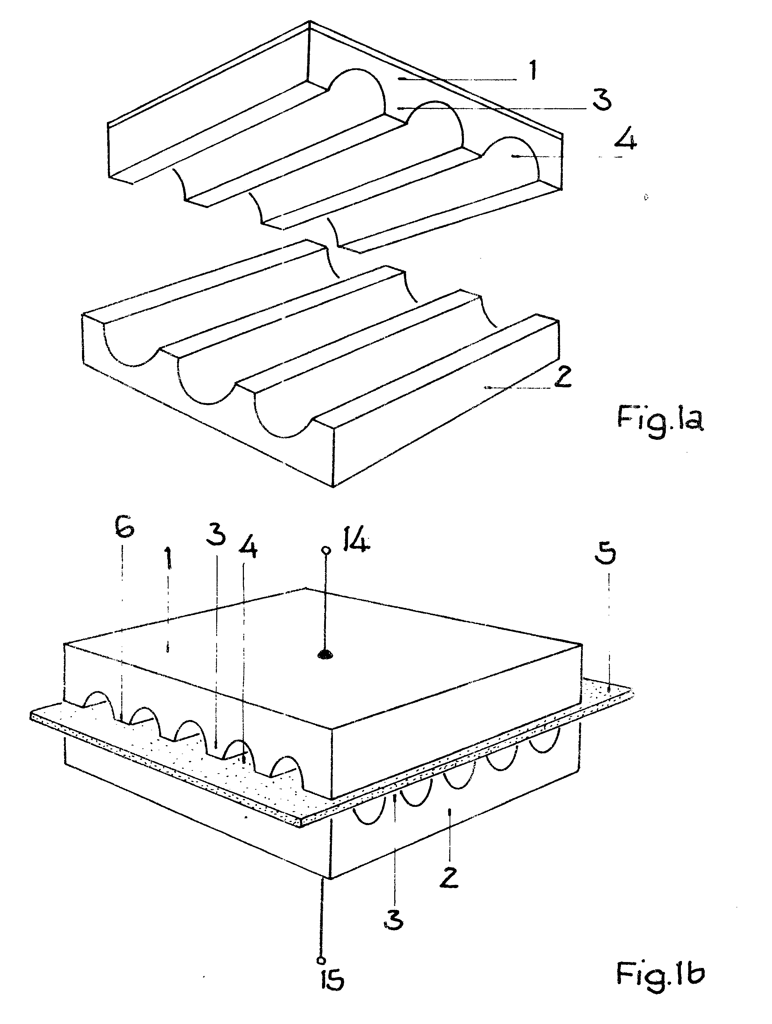

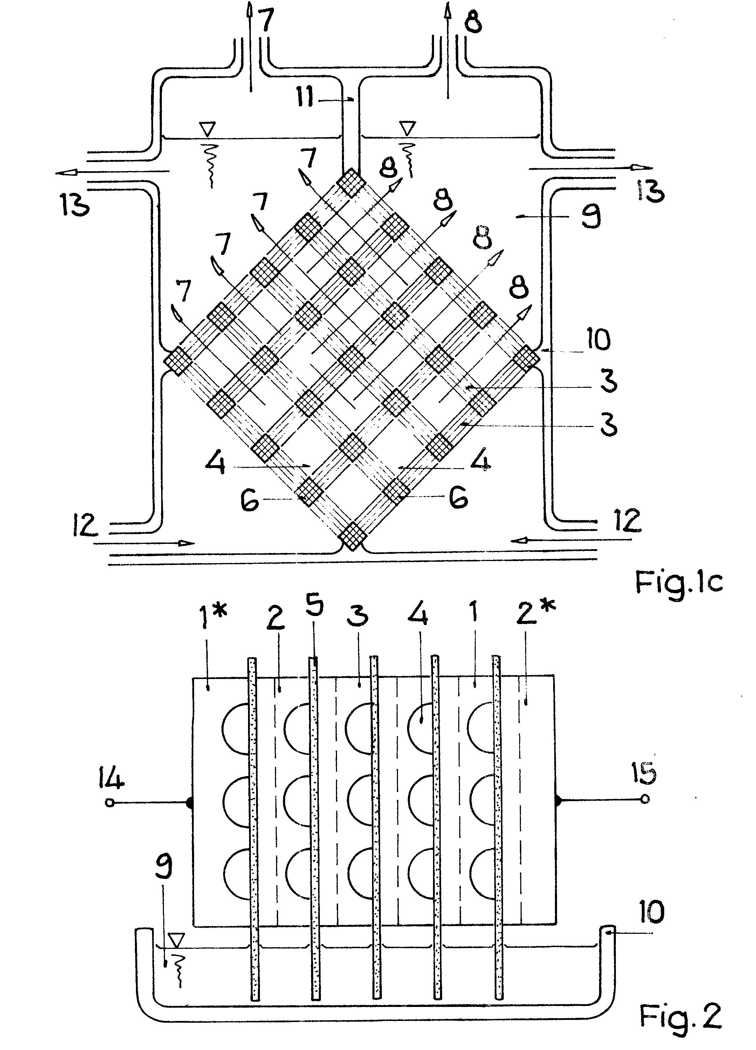

In Fig. 1a sind 1 und 2 Platten aus pyrolytischem Graphit, die auf einer Seite eine Struktur aus wechselweise und parallel zueinander verlaufenden Wällen 3 und Gräben 4 tragen. Die Wälle verjüngen sich zur ebenen Stirnseite hin. Beide Platten 1 und 2 werden in der Plattenebene bezüglich der Strukturen um 90° gegeneinander verdreht mit der Membran 5 als Zwischenlage aufeinandergelegt, wie dies in der Figur 1b dargestellt ist. 6 sind die Druckkontakte, die in den Bereichen der sich überkreuzenden Wälle 3 zustande kommen. 14 ist der Kathodenanschluß an der Platte 1 und 15 ist der Anodenanschluß an der Platte 2. In Fig. 1c ist die Anordnung nach 1b in einem Gefäß 10 mit einem sauren Elektrolyten 9 dargestellt. Die Elektrodenanordnung liegt dabei in der Bildebene, so daß bei durchsichtig gedachter Darstellung die Kanal- oder Halb-Röhrensysteme erkennbar sind. Der Elektrolyt 9 strömt durch die Einlässe 12 in das Gefäß 10 und ist aufgrund der Gefäßkonstruktion und der Anordnung der Elektroden im Gefäß gezwungen, durch die beiden um 90° verdrehten parallelen Halb-Röhrensysteme zu fließen. Der Sauerstoff 7 strömt mit dem Elektrolyten 9 durch das Halb-Röhren-System von rechts unten nach links oben und der Wasserstoff 8 strömt mit dem Elektrolyten 9 von links unten nach rechts oben. 11 ist eine Trennwand, die den Auffangraum für Sauerstoff 7 von dem Auffangraum für Wasserstoff 8 trennt. Der Elektrolyt 9 wird über die Abflüsse 13 wieder zu den Einlässen 12 zurückgeführt.

## Ausführungsbeispiel 2

In Fig. 2 sind 1 und 2 Graphitplatten, die bis auf die einseitig mit Strukturen versehenen Abschlußplatten 1* und 2* beidseitig eine Struktur mit parallelen Wällen 3 und Gräben 4 haben. Die parallelen Wall-Graben-Strukturen auf Vorder- und Rückseite der Platten sind um 90° gegeneinander verdreht. 5 sind Membrane zwischen den Platten 1 und 2, welche nach unten überstehen und dort in ein Gefäß 10, das z. B. angesäuertes Wasser 9 enthält, hineinragen. Die Membrane 5 sind mit einer Säure getränkt und saugen das Wasser 9 aus dem Gefäß 10 durch ihre Dochtwirkung zwischen die Elektroden 1 und 2. 14 ist der Kathoden-Anschluß an der Platte 1* und 15 ist der Anoden-Anschluß der Elektrolyse-Batterie an der Platte 2*. Der erzeugte Sauerstoff und Wasserstoff wird analog zu der anhand der Fig. 1c erläuterten Anordnung getrennt abgeführt.

## Ausführungsbeispiel 3

In Fig. 3a sind 1 und 2 Nickelplatten, die mit Ausnahme der einseitig mit Strukturen versehenen Abschlußplatten 1* und 2* beidseitig eine Struktur mit parallelen Gräben 4 und Wällen 3 haben. Die Richtung der parallelen Wälle 3 und Gräben 4 von Vorder- zu Rückseite der Platten 1 bzw. 2 ist um 90° gegeneinander versetzt. Die Platten werden außerdem so zusammengefügt, daß sich die Wallstrukturen an den Oberflächen zweier benachbarter Platten kreuzen. Zwischen den Platten 1 und 2 liegt jeweils eine Ionenaustauscher-Membran 16, die auf der Kathodenseite eine Pt-Katalysator-Schicht 17 und auf der Anodenseite eine (Pt + Pd)-Katalysator-Schicht 18 trägt. Zwischen dieser Membran und der Kathode befindet sich außerdem jeweils eine Wasser-ableitende Folie 19, die elektrisch ausreichend leitend ist. Die Wasser-ableitende Folie reicht bis in das Auffang-Gefäß 21 für das Reaktionswasser 20. 14 ist der Kathoden-Anschluß an der Abschlußplatte 1* und 15 der Anoden-Anschluß an der anderen Anschlußplatte 2*.

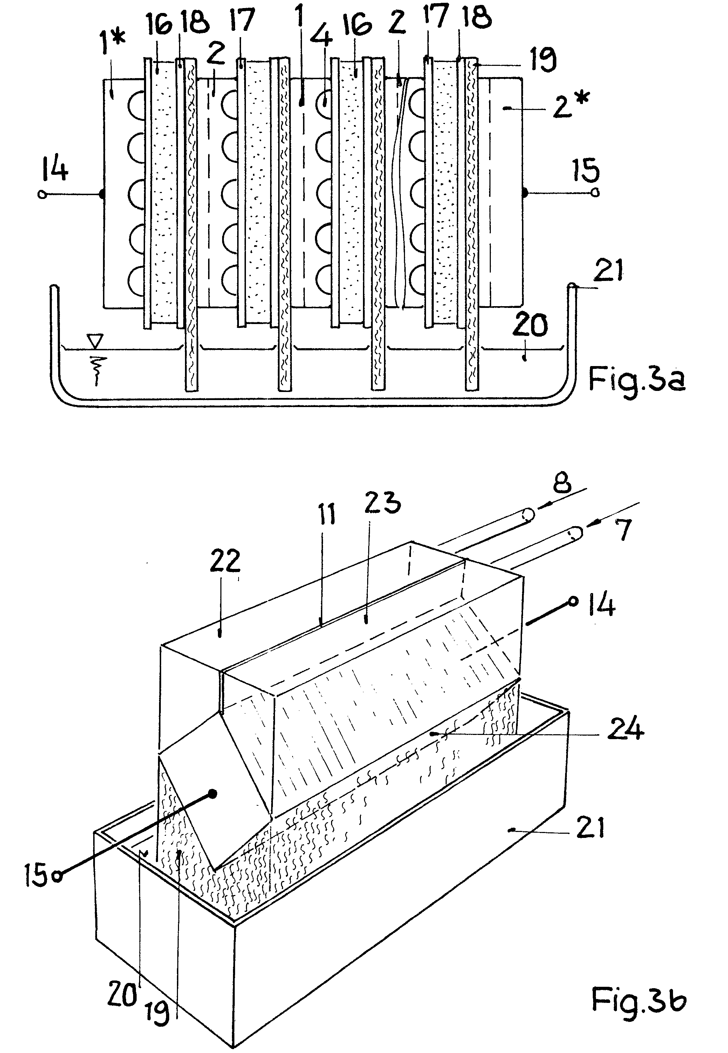

In Fig. 3b ist diese Brennstoff-Zellen-Batterie noch einmal perspektivisch dargestellt. 7 und 8 sind der Wasserstoff- bzw. Sauerstoff-Strom, welche in die Brennstoff-Zellen-Batterie 24 (wie in Fig. 3a im Querschnitt dargestellt) geleitet werden. 11 ist die Trennwand zwischen der Wasserstoff-Kammer 23 und der Sauerstoff-Kammer 22. 14 und 15 sind der Kathoden- und Anoden-Anschluß. Die Wasser-ableitenden Folien 19 hängen in das Gefäß 21, in dem das Reaktionswasser 20 aufgefangen wird.

# 0 021 376

Bezugsziffern

1  Kathode
1* Kathoden-Abschlußplatte
2  Anode
2* Anoden-Abschlußplatte
3  Wall
4  Graben
5  Membran
6  Druck-Kontakte
7  Wasserstoff
8  Sauerstoff
9  Elektrolyt
10 Elektrolyse-Gefäß
11 Trennwand
12 Elektrolyt-Einlaß
13 Elektrolyt-Auslaß
14 Kathoden-Anschluß
15 Anoden-Anschluß
16 Ionenaustauscher-Folie
17 Kathoden-Katalysator-Schicht auf 16
18 Anoden-Katalysator-Schicht auf 16
19 Docht-Membran
20 Reaktions-Wasser
21 Auffang-Gefäß für 20
22 Kammer für Sauerstoff
23 Kammer für Wasserstoff
24 Brennstoff-Zelle

## Patentansprüche

1. Elektroden für eine Brennstoff- und/oder eine Elektrolyse-Zelle, bei der als Anode und Kathode zwei Platten oder Scheiben (1 und 2) aus geeignetem Material vorgesehen sind, wobei jede Platte oder Scheibe (1, 2) mindestens auf einer ihrer beiden Oberflächenseiten eine Struktur aus wechselweise und parallel zueinander verlaufenden Wällen (3) und Gräben (4) aufweist und die beiden Platten oder Scheiben (1, 2) — mit mindestens einer Membran (5) als Zwischenlage — mit ihren strukturierten Oberflächenseiten so zusammengesetzt sind, daß alle Wälle (3) in der Struktur beider Platten (1, 2) sich kreuzen und an den Kreuzungspunkten (6) auf beiden Seiten der Membran (5) aufliegen, so daß die Gräben (4) in beiden Platten oder Scheiben zwei sich kreuzende Systeme von parallel zueinander verlaufenden Halb-Röhren bilden, die durch die Membran (5) voneinander getrennt sind, dadurch gekennzeichnet, daß die Dicke der Platten oder Scheiben (1, 2) kleiner als $5 \cdot 10^{-2}$ cm ist.

2. Elektroden nach Anspruch 1, dadurch gekennzeichnet, daß die Richtung der beiden Halb-Röhren-Systeme um einen Winkel von 90° gegeneinander in der Plattenebene verdreht ist, und daß die beiden getrennten Systeme aus jeweils parallel zueinander verlaufenden Halb-Röhren zur Zuleitung oder zur Abführung von Reaktionspartnern und Reaktionsprodukten vorgesehen sind.

3. Elektroden nach Anspruch 1 oder 2, dadurch gekennzeichnet, daß die Platten oder Scheiben (1, 2) aus Graphit, mit Graphit überzogenem Metall, Metall, einer metallisch leitenden Verbindung oder aus hochdotiertem Halbleitermaterial bestehen, während die Membran (5) aus organischem Filz, Glaspapier, Asbestpapier oder aus organischem Material besteht.

4. Elektroden nach einem der vorhergehenden Ansprüche, dadurch gekennzeichnet, daß die Membran (5) eine Ionenaustauscher-Membran oder eine Matrix mit festgelegtem Elektrolyten ist, und daß ihre Anodenseite und ihre Kathodenseite mit einer Katalysatorschicht (17 und 18) überzogen sind.

5. Elektroden nach einem der vorhergehenden Ansprüche, dadurch gekennzeichnet, daß zwischen die Membran (5) und die Kathode (1) oder die Membran (5) und die Anode (2) eine Wasser-ableitende Folie (19) gelegt ist.

6. Elektroden nach einem der vorhergehenden Ansprüche, dadurch gekennzeichnet, daß sie zu einer Kaskade (24) zusammengesetzt sind, wobei eine Seite einer Platte Anode und ihre andere Seite Kathode ist (bipolare Elektroden).

7. Verwendung der Elektroden nach einem der vorangehenden Ansprüche für Stromdichten durch die Elektroden, die kleiner als $2 \cdot 10^{-2}$ A/cm$^2$ sind.

8. Verwendung der Elektroden nach einem der vorhergehenden Ansprüche in einer Elektrolyse-Anordnung zur Herstellung von Wasserstoff (7) und Sauerstoff (8).

9. Verwendung der Elektroden nach einem der vorhergehenden Ansprüche, in einer Brennstoff-zellenanordnung.

4

**Claims**

1. An electrode system for a fuel and/or electrolysis cell, in which two plates or discs made from suitable material are provided as the anode and cathode; each plate or disc has a structure of alternating and parallel ridges and grooves at least on one of its two surfaces; and that the two plates or discs with at least one membrane as an intermediate layer are so assembled with their structured surfaces that all of the ridges in the structure of both plates cross and at the crossing points about against both sides of the membrane so that the grooves form two crossing systems of semicylinders running in parallel with each other, and separated by the membrane, wherein the thickness of the plates or discs is less than $5 \times 10^{-2}$ cm and the current intensity though the electrodes is less than $2 \times 10^{-2}$ amperes/cm$^2$.

2. An electrode systems as claimed in Claim 1, wherein the axis of the cylinders of the two semicylinder systems are rotated in the plane of the plates by an angle of 90° with respect to each other, or wherein two separate systems of parallel semicylinders are provides for the supply and removal of reaction partners and reaction products.

3. An electrode system as claimed in any one of Claims before the plates or discs comprise graphite, metal coated in graphite, metal, a metallically conductive compound or highly-doped semiconductor material, wherein the membrane comprises organic felt, glass paper, asbestos paper or an organic material.

4. An electrode system as claimed in any one of claims before wherein the membrane is an ion exchange membrane or a matrix having a fixed electrolyte; and its anode side and its cathode side are coated in a layer of catalyst.

5. An electrode system as claimed in any one of claims before wherein a water-repellent film is placed between the membrane and the cathode or anode.

6. An electrode system as claimed in any one of claims before wherein several plates or discs are assembled to form a cascade, one side of a plate or disc being an anode and the other side of a plate or disc being a cathode.

7. An electrode system substantially as described in any one of Claims before with electrical current densities less than $2 \times 10^{-2}$ A/cm$^2$.

8. An electroysis arrangement in any one of claims before for manufactures hydrogen and oxygen having an electrode system as claimed in any one of claims 1 to 9.

9. A fuel cell arrangement having an electrode system as claimed in any one of Claims before.

**Revendications**

1. Electrodes pour une cellule à combustible et/ou une cellule d'électrolyse, où il y a deux plaques ou plateaux (1 et 2) de prévus, dans un matériau approprié, comme anode et cathode. Chacune de ces plaques ou chacun de ces plateaux (1, 2) présente, au moins sur une de ses deux surfaces, une structure se composant d'une alternance de remblais (3) et de fossés (4) disposés parallèlement entre eux, et les deux plaques ou plateaux (1, 2) sont rassemblés — avec au minimum une membrane (5) en tant que couche intercalaire — avec leurs surfaces structurées placées de telle manière que tous les remblais (3) de la surface structurée des deux plaques (1, 2) se coupent et appuient aux points de croisement (6) des deux côtés de la membrane (5), si bien que les fossés (4) des deux plaques ou plateaux forment deux systèmes semi-tubulaires se croisant, placés parallèlement entre eux, séparés par la membrane (5), et qui se caractérisent par le fait que l'épaisseur des plaques ou plateaux (1, 2) est inférieure à $5 \cdot 10^{-2}$ cm.

2. Electrodes selon la prétention 1, se caractérisant par le fait que la direction des deux systèmes semi-tubulaires est décalée à raison d'un angle de 90° sur la surface du plateau, et que les deux systèmes séparés se composant de demi-tuyaux disposés parallèlement entre eux sont prévus pour l'amenée et l'enlèvement de partenaires réactionnels et de produits réactionnels.

3. Electrodes selon la prétention 1 ou 2, se caractérisant par le fait que les plaques ou plateaux (1, 2) sont de graphite, de métal revêtu de graphite, de métal, d'une combinaison conductive métalliquement, ou d'un matériau semi-conducteur heutement dopé, tandis que la membrane (5) est en feutre organique, en papier de verre, en papier d'amiante ou d'un matériau organique.

4. Electrodes selon l'une des prétentions précédentes, se caractérisant par le fait que la membrane (5) est une membrane échangeuse d'ions ou une matrice avec des électrolytes déterminés, et que son côté d'anode et son côté de cathode sont revêtus d'une couche de catalyseur (17 et 18).

5. Electrodes selon l'une des prétentions précédentes, se caractérisant par le fait qu'entre la membrane (5) et la cathode (1) ou la membrane (5) et l'anode (2), il y ait une feuille hydrofuge (19).

6. Electrodes selon l'une des prétentions précédentes, se caractérisant par le fait qu'elles sont rassemblées en une cascade (24), tandis qu'un côté d'une plaque est l'anode et que l'autre côté est la cathode (électrodes bipolaires).

7. Utilisation des électrodes d'après l'une des revendications précedentes pour des densités de courant par les électrodes qui sont inférieures à $2 \cdot 10^{-2}$ A/cm$^2$.

8. Utilisation des électrodes d'après l'une des revendications précédentes dans un groupement d'électrolyse pour la production d'hydrogène (7) et d'oxygène (8).

9. Utilisation des électrodes selon l'une des prétentions précédentes, dans un groupement de cellules à combustible.

Fig.1a

Fig.1b

0 021 376

Fig.1c

Fig.2

9

Fig.3a

Fig.3b